(19) Europäisches Patentamt
European Patent Office
Office européen des brevets

(11) **EP 1 950 131 B1**

(12) **EUROPEAN PATENT SPECIFICATION**

(45) Date of publication and mention
of the grant of the patent:
**01.04.2015   Bulletin 2015/14**

(51) Int Cl.:
***B62M 7/12*** *(2006.01)*

(21) Application number: **08250293.1**

(22) Date of filing: **23.01.2008**

(54) **Vehicle**

Fahrzeug

Véhicule

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority:  **25.01.2007   JP 2007015571**

(43) Date of publication of application:
**30.07.2008   Bulletin 2008/31**

(73) Proprietor: **Yamaha Hatsudoki Kabushiki Kaisha
Iwata-shi, Shizuoka 438-8501 (JP)**

(72) Inventor: **Yamamoto, Yoshiaki
Iwata-shi
Shizuoka-ken 438-8501 (JP)**

(74) Representative: **Moreland, David et al
Marks & Clerk LLP
Aurora
120 Bothwell Street
Glasgow
G2 7JS (GB)**

(56) References cited:
**EP-A- 1 457 413        EP-A- 1 584 549
EP-A2- 1 741 896       FR-A- 1 112 017
FR-A- 2 722 756        JP-A- 2003 237 674
JP-A- 2006 046 326     US-A1- 2002 008 397**

**Description**

FIELD OF THE INVENTION

The present invention relates to a technique for supporting a power unit on a body frame of a straddle-type vehicle.

BACKGROUND TO THE INVENTION

In a "unit swing type" straddle-type vehicle (e.g., scooter), the power unit, including a transmission and an engine, is provided so as to be capable of swinging up and down together with a rear wheel. In such a straddle-type vehicle, generally, the power unit is connected to the body frame through a suspension member for vibration insulation, for example as described in JP-A-2004-276643. The suspension member interposed between the body frame and the power unit prevents vibration from being transmitted to the body frame by the fact that it buffers vibration originating from the power unit, thereby improving ride comfort.

Further, a buffer (rear suspension) is bridged to the power unit and the body frame. The buffer expands/contracts so as to buffer swings of the rear wheel and the power unit and, by this, also improving ride comfort.

Another example of a "unit swing type" vehicle having a suspension member is disclosed by FR2722756. The vehicle comprises a side frame that is provided with a flange that supports a pivot. The vehicle has a suspension member that has one end pivotably attached to the frame pivot and another end pivotably attached to the engine. One end of a rear shock absorber is fixed to the engine and the other end of the shock absorber is fixed to an upper flange of the frame.

However, in the above noted conventional straddle-type vehicles, the suspension member for vibration insulation is interposed between the power unit and the body frame and as the power unit and the rear wheel do not necessarily move monolithically with the body frame, reduced operation and feedback to a rider may occur. For example, when a rider attempts to accelerate the vehicle, the rider feels that the vehicle starts to accelerate while delaying from a rise in rotational speed of the rear wheel because the suspension member is interposed. In other words, when the rotational speed of the rear wheel rises, first, the suspension member is displaced by undergoing a force in a vehicle traveling direction from the power unit. Thereafter, after a force inputted from the power unit to the suspension member balances with a reaction force that the suspension member undergoes from the body frame, the power unit exerts a driving force on the body frame through the suspension member and, by this, the rider can feel a delayed acceleration of the vehicle.

The invention is one made in view of the above problems, and exists in providing the straddle-type vehicle in which it is possible to contrive improvements in the ride comfort and operational and reduced feedback.

SUMMARY OF THE INVENTION

In order to solve the above problems, a straddle-type vehicle concerned with the invention possesses a body frame, a pivot shaft which is supported to the body frame and whose movement in at least front-rear direction in regard to the body frame is regulated, a power unit which includes a power source and a transmission mechanism transmitting a power that the power source outputs to a rear wheel, and which is swingable up and down together with the rear wheel, a buffer which buffers a swing of the power unit by expanding/contracting, and a link mechanism for changing an expansion/contraction quantity of the buffer in compliance with a motion quantity of the power unit. The power unit has a first supported part attached to the pivot shaft and making possible the swing of the power unit with the pivot shaft being made a supporting point, and a second supported part connected to the body frame through the link mechanism and the buffer.

According to the invention, in comparison with a case where the pivot shaft is suspended by the suspension member for vibration insulation, the driving force generated by a rotation of the rear wheel is more directly transmitted to the body frame. As a result, a responsiveness of the vehicle in regard to an operation of the rider is improved, so that there becomes such that the good operation feeling is obtained. Further, since the second supported part is connected to the body frame through the buffer and the link mechanism, there becomes such that a good ride comfort is obtained. Incidentally, here, the straddle-type vehicle is, e.g., a motorcycle (including the scooter), a four-wheeled buggy, a snowmobile, a two-wheeled electric motor car, or the like.

In one mode of the invention, one end of the buffer is connected to the second supported part, and the other end is connected to the body frame through the link mechanism. According to this mode, in comparison with a case where the buffer is connected to the power unit through the link mechanism, a weight of a portion swinging together with the rear wheel, i.e., under-spring weight, becomes small, so that the ride comfort of the vehicle is more improved.

Further, in one mode of the invention, the first supported part of the power unit is provided in a lower part of the power unit. According to this mode, in comparison with a case where the first supported part is provided in an upper part of the power unit, it becomes near to a road surface. As a result, since a force that the first supported part pushes up the body frame at an acceleration time reduces, and a force pushing forward the body frame increases, the ride comfort and the operation feeling of the vehicle are more improved.

Further, in one mode of the invention, the buffer is disposed above the power unit. According to this mode, it is possible to increase a degree of freedom in a layout of a vehicle rear part. Further, in this mode, the buffer may be disposed so as to expand/contract in a circumferential direction of a circle whose center is made the pivot shaft. By this, a force in a direction other than an expansion/contraction direction of the buffer becomes difficult to be exerted, so that it is possible to improve a durability of the buffer. Incidentally, here, the expansion/contraction direction of the buffer suffices if it is essentially parallel to the circumferential direction of the circle whose center is made the pivot shaft, and it may slightly slant in regard to the circumferential direction. Further, in this mode, the body frame has a buffer support part to which the buffer is connected, and the buffer support part may be placed in front of the second supported part of the power unit. By this, at an expansion/contraction time of the buffer, a force that the buffer pushes up the body frame reduces, so that the ride comfort of the vehicle is more improved.

Further, in one mode of the invention, the power unit has a crank mechanism including a piston reciprocating in a cylinder and a crank shaft converting a reciprocating motion of the piston into a rotational motion, and a balancer mechanism reducing a vibration of power unit, which generates by the reciprocating motion of the piston. According to this mode, the ride comfort of the vehicle is more improved.

Further, in this mode, the balancer mechanism includes a balancer shaft and a balancer weight rotating together with the balancer shaft, and the balancer shaft and the balancer weight may be disposed so as to reduce the vibration transmitted to the pivot shaft through the first supported part. In this case, the balancer shaft and the balancer weight may be disposed such that an acceleration occurring in the pivot shaft by a resultant force of a centrifugal force occurring by a rotation of the balancer shaft and an inertial force occurring by the reciprocating motion of the piston and the rotational motion of the crank shaft is reduced by an acceleration occurring in the pivot shaft by moments of the centrifugal force and the inertial force.

The present invention is directed to a vehicle according to claim 1.

Movement of the pivot shaft in at least a front-rear direction relative to the body frame may be regulated.

The power unit may be coupled to the rear wheel via a transmission mechanism.

One end of the buffer may be connected to the second supported part, and another end, such as an opposite end may be connected to the body frame through the link mechanism.

The first supported part of the power unit may be provided in a lower part of the power unit.

The buffer may be disposed above the power unit.

The buffer may be disposed so as to expand/contract in a circumferential direction of a circle whose center is defined by the pivot shaft.

The body frame preferably has a buffer support part to which the buffer is connected. The buffer support part may be placed forward of the second supported part of the power unit. In this arrangement to forward positioning is with reference to a front-rear direction of the vehicle.

The power unit may comprise a crank mechanism including a piston reciprocating in a cylinder and a crank shaft converting a reciprocating motion of the piston into a rotational motion, and a balancer mechanism adapted to reduce vibration of the power unit generated by the reciprocating motion of the piston.

The balancer mechanism may include a balancer shaft and a balancer weight rotating together with the balancer shaft. The balancer shaft and the balancer weight may be disposed so as to reduce the vibration transmitted to the pivot shaft through the first supported part.

The balancer shaft and the balancer weight may be disposed such that an acceleration occurring in the pivot shaft by a resultant force of a centrifugal force occurring by a rotation of the balancer shaft and an inertial force occurring by the reciprocating motion of the piston and the rotational motion of the crank shaft is reduced by an acceleration occurring in the pivot shaft by moments of the centrifugal force and the inertial force.

The vehicle may be provided in the form of a straddle-type vehicle.


BRIEF DESCRIPTION OF THE DRAWINGS

These and other aspects of the present invention will now be described, by way of example only, with reference to the accompanying drawings, in which:

Fig. 1 is a right side view of a motorcycle which is an example of one embodiment of the invention;
Fig. 2 is a right side view of a body frame of the motorcycle of Fig. 1;
Fig. 3 is a plan view of the body frame of Fig. 2;
Fig. 4 is a lateral side view showing an aspect of an engine unit, a buffer and a link mechanism of the motorcycle of Fig. 1;
Fig. 5 is a left side view of the engine unit of Fig. 4;

Fig. 6 is a rearward view showing an aspect facing on a pivot support part and a longitudinal frame part of the body frame;

Fig. 7 is a rearward view showing an aspect facing on the link mechanism;

Fig. 8 is diagrammatic representation of the functioning of a crank mechanism disposed in the engine unit;

Fig. 9 is a diagrammatic representation of a positional relation between the crank mechanism and a balancer mechanism; and

Fig. 10 is a lateral side view showing an aspect facing on an engine unit, a buffer and a link mechanism of a motorcycle in accordance with another embodiment of the invention.

DETAILED DESCRIPTION OF THE DRAWINGS

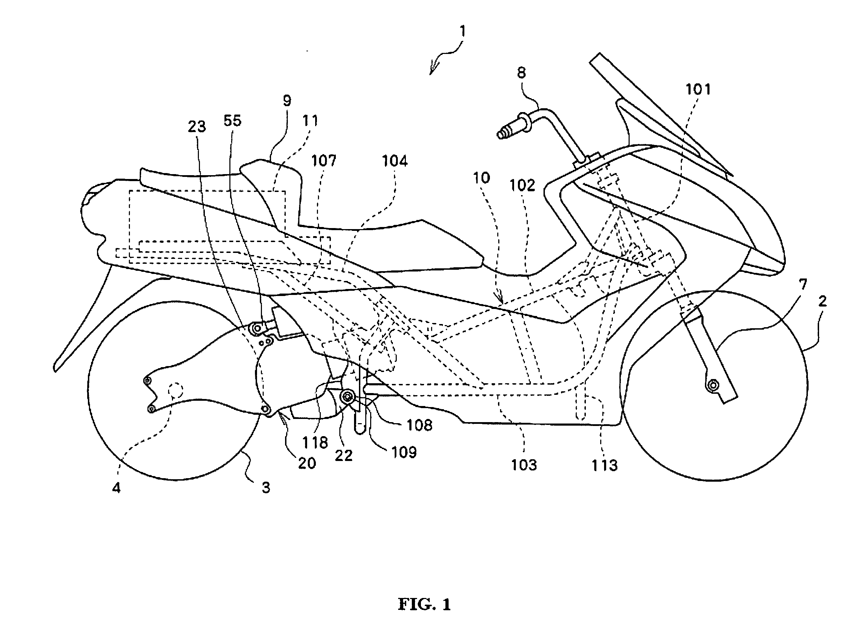

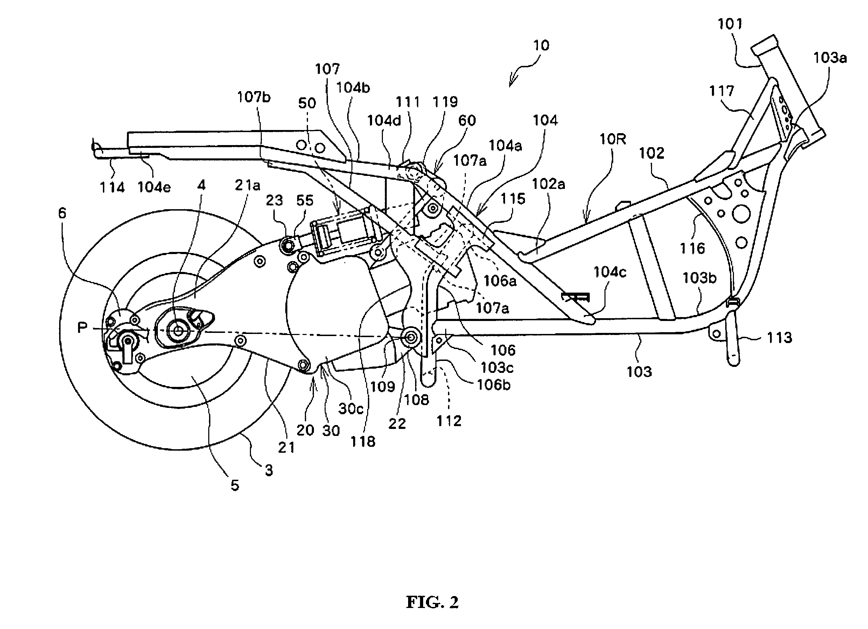

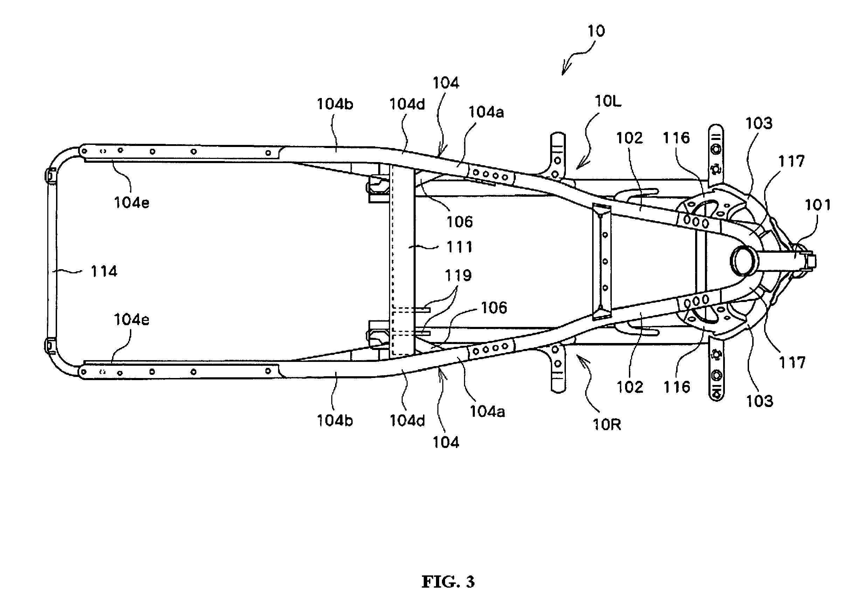

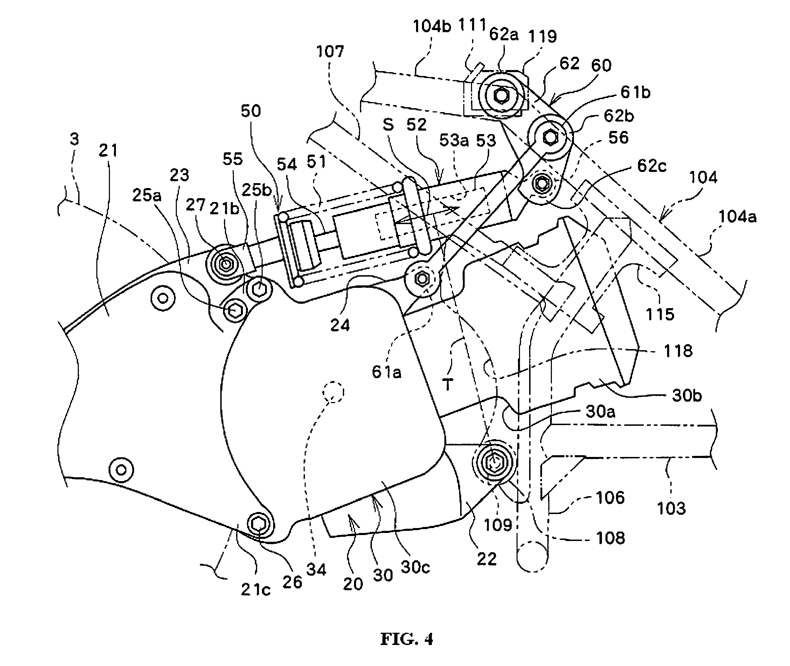

Hereunder, one embodiment of the invention is described by referring to the drawings. Fig. 1 is a right side view of a motorcycle (scooter) 1 of unit swing type. Fig. 2 is a right side view of a body frame 10 of the motorcycle 1, Fig. 3 is a plan view of the body frame 10, and Fig. 4 is a right side view of an engine unit (power unit) 20 and a buffer (rear suspension) 50. Incidentally, in Fig. 2, the engine unit 20 and the buffer 50 are shown together with the body frame 10.

As shown in Fig. 1 or Fig. 2, besides the body frame 10, the engine unit 20 and the buffer 50, the motorcycle 1 possesses a link mechanism 60, a front wheel 2, a rear wheel 3 and a pivot shaft 109. The front wheel 2 is disposed in a front part of the motorcycle 1, and supported by lower end part of a front fork 7. An upper part of the front fork 7 is rotatably supported by a head pipe 101 of the body frame 10. A handle 8 is connected to an upper end part of the front fork 7. The rear wheel 3 is disposed in a rear part of the motorcycle 1. A wheel shaft 4 of the rear wheel 3 is rotatably supported by a rear end part of the engine unit 20. The rear wheel 3 is swingable in an up and down direction together with the engine unit 20 relative to the body frame 10.

As shown in Fig. 2 or Fig. 3, besides the head pipe 101, the body frame 10 includes one pair of a right frame 10R and a left frame 10L. The right frame 10R and the left frame 10L include respectively upside frame parts 102, downside frame parts 103, rear side frame parts 104, longitudinal frame parts 106, support post parts 107, and pivot support parts 108. Further, the body frame 10 includes an upside cross part 111, a downside cross part 112, a front side cross part 113, and a rear side cross part 114, which are bridged between the right frame 10R and the left frame 10L.

A front end part (upper end part) 103a of the downside frame part 103 is joined to a lower part of the head pipe 101. The left/right downside frame parts 103, 103 respectively spread laterally from the front end parts 103a, extend downward, and are bent rearward at bent parts 103b. The front side cross part 113 is bridged to the left side bent part 103b and the right side bent part 103b. A rear end part 103c of the downside frame part 103 is vertically joined to a lower part of the longitudinal frame part 106. A front end part of the upside frame part 102 is joined to the front end part 103a of the downside frame part 103. The left/right upside frame parts 102, 102 respectively spread laterally from the front end parts, and slantingly extend rearward. A rear end part 102a of the upside frame part 102 is joined to a midway part of the rear side frame part 104.

The rear side frame part 104 includes a slant part 104a slantingly extending rearward, and a rearward extension part 104b continuing to a rear end part of the slant part 104a and extending rearward. A front end part (lower end part) 104c of the slant part 104a is joined between the rear end part 103c and the bent part 103b of the downside frame part 103. The slant part 104a slantingly extends upward toward a body rear part from the front end part 104c, and its upper end part 104d is bent rearward. The rearward extension part 104b continues to the upper end part 104d. The upside cross part 111 whose cross section is approximately C-shaped is bridged between the left side upper end part 104d and the right side upper end part 104d. A link attachment part 119 is joined to the upside cross part 111. The link attachment part 119 rotatably supports one end of a lever 62 of the link mechanism 60 (refer to Fig. 4). This link attachment part 119 will be described later.

Between the front end part 104c and the upper end part 104d, the rear end part 102a of the upside frame part 102 is joined. Further, between the front end part 104c and the upper end part 104d, an upper end part 106a of the longitudinal frame part 106 is joined approximately, vertically in regard to the slant part 104b. The longitudinal frame part 106 is bent slightly, slantingly extending downward from the upper end part 106a, and then extending in a vertical direction. The lower side cross part 112 is bridged between a lower end part of the left side longitudinal frame part 106 and a lower end part 106b of the right side longitudinal frame part 106. Between the upper end part 106a and the lower end part 106b of the longitudinal frame part 106, a front end part 107a of the support post part 107 is vertically joined. The support post part 107 slantingly extends upward toward the body rear part from the front end part 107a, and its rear end part 107b is joined to the rearward extension part 104b. As mentioned above, the rearward extension part 104b continues to the upper end part 104d of the slant part 104a, and extends rearward from the upper end part 104d. The rearward extension part 104b supports a seat 9 disposed in a front-rear direction center of the vehicle body (refer to Fig. 1). Below the seat 9 and between the left/right rearward extension parts 104b, a storage box 11 is provided. Below this storage box 11, there is disposed the buffer 50 extending in a front-rear direction. Further, below the rearward extension part 104b, there are disposed the rear wheel 3 and the engine unit 20. The rear side cross part 114 is bridged between rear end parts 104e of the one pair of rearward extension parts 104b (refer to Fig. 3).

In a lower part of the longitudinal frame part 106, there is provided the cylindrical pivot support part 108. The pivot support parts 108 are provided left and right as well, and the left/right pivot support parts 108, 108 support a pivot shaft 109 extending in a vehicle width direction. Left/right end parts of the pivot shaft 109 are supported by the pivot support parts 108, 108, and the pivot shaft 109 is regulated in its relative movement in regard to the body frame 10. Incidentally, a support plate part 118 is joined to the support post part 107 and the longitudinal frame part 106. The support plate part 118 extends downward from a joined place between the front end part 107a of the support post part 107 and the longitudinal frame part 106. A lower part of the support plate part 118 is joined to an outer periphery face of the cylindrical pivot support part 108 and, by this, the longitudinal frame part 106 supports the pivot support part 108 through the support plate part 118. In front of the pivot support part 108, there is placed a joined place between the rear end part 103c of the downside frame part 103 extending in the front-rear direction of the vehicle body and the longitudinal frame part 106.

Incidentally, a reinforcing plate 115 is joined to a joined part between the upper end part 106a of the longitudinal frame part 106 and the slant part 104. Further, a reinforcing plate 116 is bridged between a front part of the downside frame part 103 and a front part of the upside frame part 102. Additionally, a reinforcing frame part 117 is bridged between the front part of the upside frame part 102 and the head pipe 101.

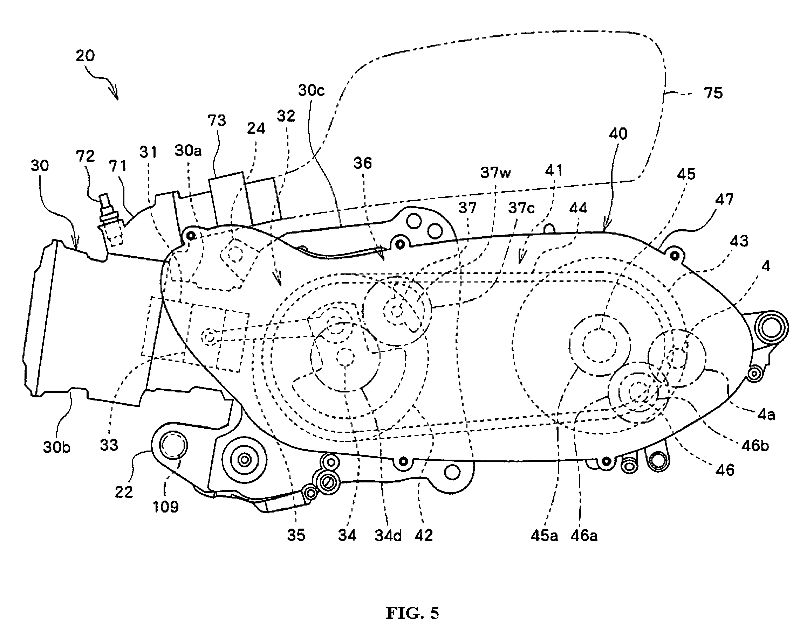

Fig. 5 is a left side view of the engine unit 20. As shown in Fig. 5, the engine unit 20 possesses an engine 30 which is a power source of the vehicle, a transmission mechanism 40 transmitting a power that the engine 30 outputs to the rear wheel 3, and a rear arm 21 (refer to Fig. 4) supporting the rear wheel 3. Further, the engine unit 20 possesses one pair of left/right downside supported parts 22, 22, an upside supported part 23, and a link attachment part 24. As mentioned above, the motorcycle 1 is a vehicle of unit swing type, and the engine unit 20 is supported by the body frame 10 so as to be swingable in an up and down direction together with the rear wheel 3.

As shown in Fig. 5, the engine 30 possesses a cylinder block 30a in which there is formed a cylinder 31, a cylinder head 30b covering an upper part of the cylinder block 30a, a crank mechanism 32, a balancer mechanism 36, and a crank case 30c. The crank mechanism 32 possesses a piston 33, a crank shaft 34, and a connecting rod 35 which connects the crank shaft 34 and the piston 33.

In the cylinder head 30b, there is formed an intake port (not shown in the drawing) continuing to the cylinder 31. An intake pipe 71 supplying the air flowing-in from a air cleaner 75 to the engine 30 is connected to an intake port. An injector 72 injecting a fuel to an intake passage is attached to the intake pipe 71. Further, a throttle body 73 is connected to the intake pipe 71, and the air cleaner 75 is connected to the throttle body 73. The air cleaner 75 is disposed below the rearward extension part 104b of the body frame 10 and above a drive case 47 accommodating a later-mentioned stepless transmission 41 and the like.

The piston 33 reciprocates in the cylinder 31 by the fact that the fuel supplied from the injector 72 combusts. The crank mechanism 32 converts a reciprocating motion of the piston 33 into a rotational motion of the crank shaft 34. The crank shaft 34 is disposed in the crank case 30c in the vehicle width direction.

The cylinder block 30a and the cylinder head 30b are disposed with a posture in which an axial direction (direction along which the piston 33 reciprocates) of the cylinder 31 slants in the vehicle traveling direction. The crank case 30c extends axially in the vehicle width direction, and is disposed in front of the rear wheel 3. In an upside wall part of the crank case 30c, there is formed the link attachment part 24. The link attachment part 24 will be described in detail later.

The transmission mechanism 40 transmits a rotation of the crank shaft 34 to the rear wheel 3 at a reduced rotational velocity. In this example, the transmission mechanism 40 possesses the stepless transmission mechanism 41, a driven shaft 45, and an intermediate shaft 46, and these are accommodated in the drive case 47 which extends longitudinally in the front-rear direction of the vehicle.

The stepless transmission mechanism 41 possesses a drive pulley 42, a driven pulley 43, and a V-belt 44 wound around the drive pulley 42 and the driven pulley 43. The drive pulley 42 is attached to an end part of the crank shaft 34, and rotates together with the crank shaft 34. The driven shaft 45 is disposed behind the crank shaft 34 and while separating from the wheel shaft 4 of the rear wheel 3. The driven pulley 43 is fitted to the driven shaft 45 so as to idle in regard to the driven shaft 45. A torque of the crank shaft 34 is transmitted to the driven pulley 43 through the drive pulley 43 and the V-belt 44. Radii of portions, of the V-belt 44, wound around the drive pulley 42 and the driven pulley 43 change in compliance with a rotation rate of the crank shaft 34 and, by this, a speed reducing ratio changes in a non-stepwise manner.

The transmission mechanism 40 possesses a centrifugal clutch (not shown in the drawing) coaxially with the driven shaft 45. The torque transmitted to the driven pulley 43 is transmitted to the driven shaft 45 through the centrifugal clutch which is under a connected state. A gear 45a interlocking with the driven shaft 45 is fitted to the driven shaft 45. A large diameter gear 46a interlocking with the intermediate shaft 46 is fitted to the intermediate shaft 46. The large diameter gear 46a meshes with the gear 45a of the driven shaft 45, and a torque transmitted to the driven shaft 45 is transmitted to the intermediate shaft 46 through the gear 45a and the large diameter gear 46a. Further, a small diameter gear 46b rotating together with the intermediate shaft 46 is fitted to the intermediate shaft 46, and the small diameter gear 46b meshes with a gear 4a fitted to the wheel shaft 4. By this, a torque transmitted to the intermediate shaft 46 is transmitted to the wheel shaft 4 through the small diameter gear 46b and the gear 4a.

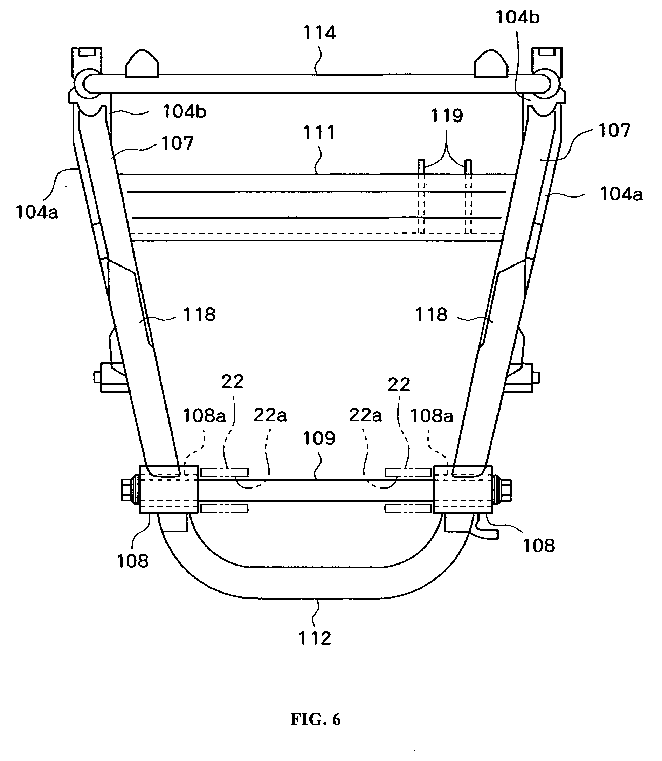

The downside supported parts 22, 22 are rotatably attached to the pivot shafts 109 of the body frame 10. Fig. 6 is a view showing an aspect facing on the pivot support parts 108, 108 and the support plate parts 118, 118 of the frame body 10 from a rearward viewpoint. In the downside supported part 22, there is provided an insertion hole 22a extending in the vehicle width direction, and the pivot shaft 109 is inserted through the insertion hole 22a. By this, the engine unit 20 is made swingable up and down monolithically with the rear wheel 3 with the pivot shaft 109 being made a supporting point.

Further, as shown in Fig. 2, the pivot shaft 109 is provided at a height in which a virtual plane P including the wheel shaft 4 and the pivot shaft 109 becomes approximately parallel to a road surface. By this, at the running time of the vehicle, the wheel shaft 4 swings up and down while striding over a horizontal plane (face parallel to the road surface) including the pivot shaft 109.

Further, the downside supported part 22 is formed monolithically with the crank case 30c accommodating the crank shaft 34. As shown in Fig. 4 or Fig. 5, the downside supported part 22 is formed so as to protrude forward from a wall part of the crank case 30c, and placed in a lower part of the engine 30. The downside supported part 22 is placed below the cylinder block 30a, and supported from below by the pivot shaft 109 of the body frame 10.

Incidentally, as mentioned above, in the pivot support part 108, there is formed an insertion hole for inserting the pivot shaft 109, which extends in the vehicle width direction. As shown in Fig. 6, inside this insertion hole, there is disposed a cylindrical bush 108a having an inner diameter corresponding to an outer diameter of the pivot shaft 109. The pivot shaft 109 is inserted inside this bush 108a, and the pivot support part 108 supports the pivot shaft 109 through the bush 108a.

The rear arm 21 is disposed in a right side of the rear wheel 3. As shown in Fig. 2, the rear arm 21 is a member of roughly triangular shape, which extends in the front-rear direction of the vehicle. A rear part 21a of the rear arm 21 rotatably supports the wheel shaft 4 of the rear wheel 3. Further, to a rear end part of the rear arm 21, there is attached a brake caliper 6 for braking the rear wheel 3 by nipping a brake disc 5 rotating together with the rear wheel 3.

As shown in Fig. 4, an attachment part 21b provided in a front end part of the rear arm 21 is fixed to an upper part of the crank case 30c by two bolts 25a, 25b. Further, an attachment part 21c provided in a position separated downward from the attachment part 21b is fixed to a lower part of the crank case 30c by a bolt 26.

Further, in an upper end part (in this example, slightly above than the attachment part 21b) of the rear arm 21, there is provided the upside supported part 23. The upside supported part 23 is connected to the body frame 10 through the buffer 50 and the link mechanism 60. In this example, by the fact that a bolt 27 is inserted in the vehicle width direction to the upside supported part 23 and a rear end part of the buffer 50, the buffer 50 is rotatably attached to the upside supported part 23.

As mentioned above, the engine 30 possesses the balancer mechanism 36. The balancer mechanism 36 is a mechanism suppressing the vibration of the engine unit 20, which owes to the reciprocating motion of the piston 33. As shown in Fig. 5, the balancer mechanism 36 possesses a balancer shaft 37, a gear 37c rotating together with the balancer shaft 37, and a balancer weight 37w similarly rotating together with the balancer shaft 37. The gear 37c meshes with a gear 34d rotating together with the crank shaft 34, and the balancer shaft 37 rotates at a uniform speed in a direction reverse to the crank shaft 34. In the present embodiment, a position of the balancer shaft 37 and a position of the balancer weight 37w in a circumferential direction of the balancer shaft 37 are set the vibration of the downside supported part 22 is suppressed, and the vibration of the engine unit 20 is not transmitted to the pivot shaft 109 from the downside supported part 22. The balancer mechanism 36 will be described in detail later.

As shown in Fig. 4, the buffer 50 is a one-piece type suspension, and possesses a coil spring 51 and a damper 52 inserted to the coil spring 51. The damper 52 possesses an outer tube 53, a rod 54, an engine side attachment part 55, and a frame side attachment part 56. The buffer 50 buffers abrupt swings of the engine unit 20 and the rear wheel 3 by the fact that the damper 52 and the coil spring 51 expand/contract in compliance with irregularities of the road surface. The buffer 50 is disposed above the crank case 30c of the engine unit 20 and is arranged such that a longitudinal direction of the damper 52 slants forward.

A cylinder 53a is provided inside the outer tube 53, and an oil or gas is sealed in the cylinder 53a. A piston (not shown in the drawing) is attached to a front end part of the rod 54. The piston is accommodated in the cylinder 53a of the outer tube 53. In compliance with the swing of the engine unit 20, the rod 54 presses the piston toward an interior of the cylinder 53a of the outer tube 53, or pulls the piston. The coil spring 51 presses the rod 54 and the outer tube 53 so as to bias them towards an extended configuration.

The engine side attachment part 55 is provided so as to extend rearward from the damper 52. A rear end part of the engine side attachment part 55 is positioned rearward of the pivot shaft 109, and attached to the upside supported part 23 of the engine unit 20. The above-mentioned bolt 27 is inserted to the rear end part of the engine side attachment part 55 and the upside supported part 23 in the vehicle width direction, and the rear end part of the engine side attachment part 55 is made rotatable in regard to the upside supported part 23.

The frame side attachment part 56 is placed above the cylinder head 30b and forward of the pivot shaft 109, and connected to the body frame 10 through the link mechanism 60. The link mechanism 60 is a mechanism changing an expansion/contraction quantity of the buffer 50 in compliance with a motion quantity of the engine unit 20. The link mechanism 60 is constituted such that, as the motion quantity of the engine unit 20 becomes large, a ratio (lever ratio) of the expansion/ contraction quantity of the buffer 50 to the motion quantity of the engine unit 20 becomes large.

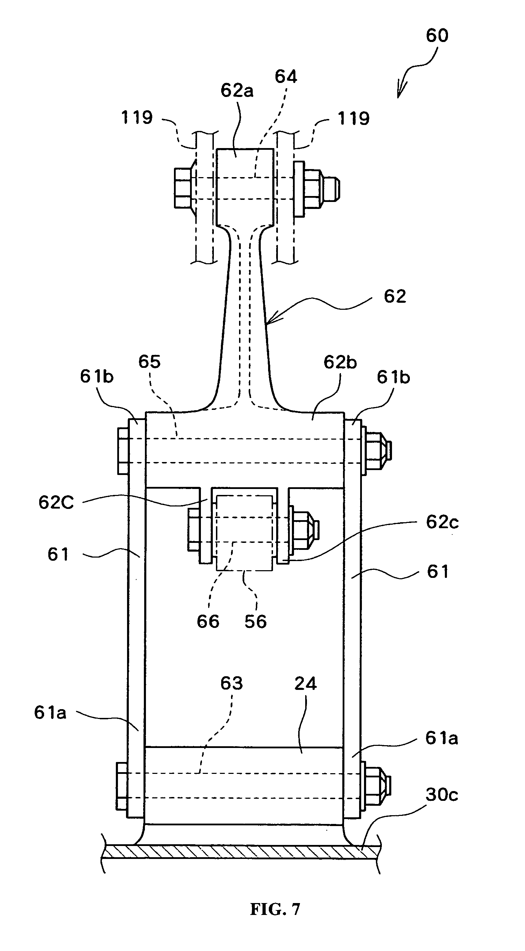

Fig. 7 is a view showing an aspect facing on the link mechanism 60 from a rearward viewpoint. As shown in Fig. 4 or Fig. 7, the link mechanism 60 includes one pair of left/right rods 61, 61, and the lever 62. As shown in Fig. 7, a bolt 63 is inserted to one end part 61a of the rod 61 and the link attachment part 24 of the engine unit 20 in the vehicle width direction and, by this, the one end part 61a of the rod 61 is attached to the engine unit 20. The other end part 61b of the rod 61 is attached to the lever 62.

The lever 62 includes a supporting point part 62a, a rod attachment part 62b, and a buffer attachment part 62c. The supporting point part 62a is rotatably attached to the above-mentioned link attachment part 119 of the body frame 10 (refer to Fig. 4). As shown in Fig. 4 and Fig. 3, the link attachment part 119 is constituted by one pair of plate-like members, and protrudes forward from the upside cross part 111. As shown in Fig. 7, a bolt 64 is inserted to the link attachment part 119 and the supporting point part 62a, and the supporting point part 62a made rotatable in regard to the link attachment part 119. The rod attachment part 62b is provided in a position slantingly separated forward from the supporting point part 62a (refer to Fig. 4). A bolt 65 is inserted to the rod attachment part 62b and the other end part 61b of the rod 61, and the rod 61 is made rotatable in regard to the rod attachment part 62b. The buffer attachment part 62c is provided in a position separated downward from the rod attachment part 62b (refer to Fig. 4). A bolt 66 is inserted to the buffer attachment part 62c and the frame side attachment part 56 of the buffer 50 and, by this, the buffer attachment part 62c is made rotatable in regard to the frame side attachment part 56.

As shown in Fig. 4, the upside supported part 23 of the engine unit 20 is provided in a position which is rearward of the link attachment part 119 and slightly lower than the link attachment part 119. By this, the buffer 50 is disposed such that a longitudinal direction of the buffer 50 slants toward the traveling direction of the vehicle, and its expansion/contraction direction (direction shown by S in Fig. 4) is directed in a circumferential or tangential direction of a circle whose center is made the pivot shaft 109. That is, in Fig. 4, the direction S becomes approximately perpendicular to a straight line T passing a center of the pivot shaft 109 and extending in a radial direction.

Further, the upside cross part 111 of the body frame 10 supporting the link mechanism 60 and the buffer 50 is placed near a center of the body frame 10 in the front-rear direction. As a result, in comparison with a case where the upside cross part 111 is provided in a rear part of the body frame 10, it is possible to increase a degree of freedom about a constitution of the rear part (in this example, the rearward extension part 104b) of the body frame 10. Further, as shown in Fig. 6, the link attachment part 119 of the body frame 10 is provided in a position deviating laterally (in this example, a right side) from a center of the upside cross part 111 in the vehicle width direction and, by this, the buffer 50 is disposed laterally or off-center in the vehicle width direction.

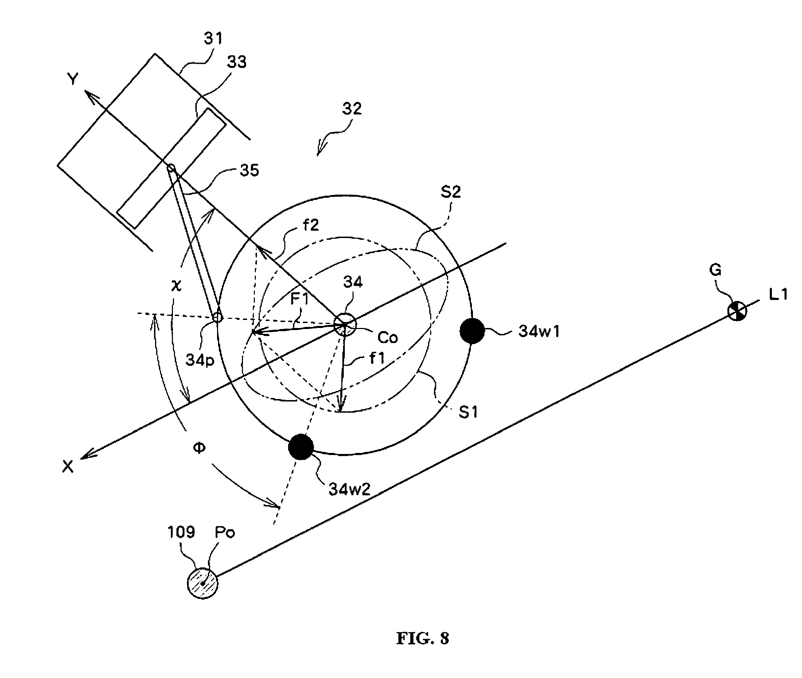

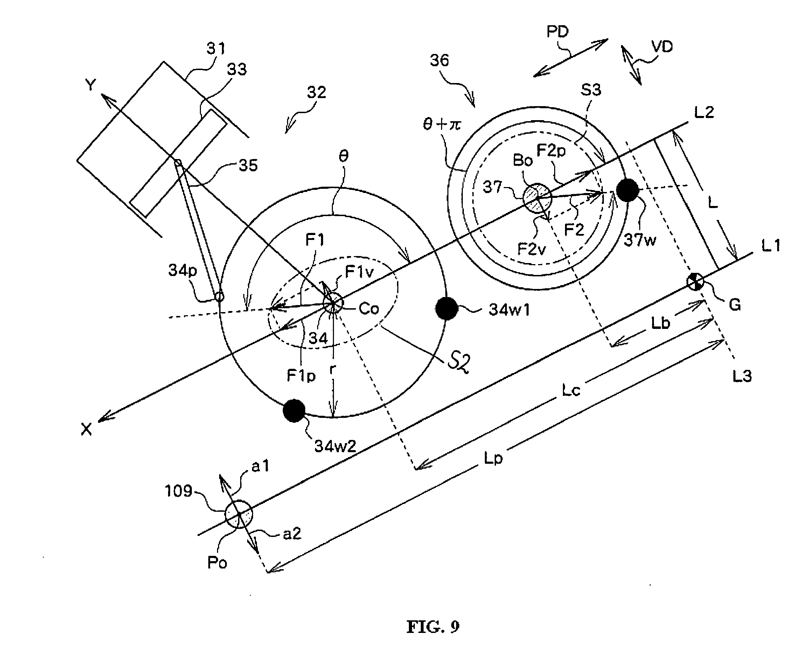

The crank mechanism 32 and the balancer mechanism 36, which are disposed in the engine 30, will now be described in detail. Fig. 8 and Fig. 9 are views for explaining a positional relation between the crank mechanism 32 and the balancer mechanism 36. As mentioned above, the balancer mechanism 36 possesses the balancer shaft 37 and the balancer weight 37w. Further, the crank mechanism 32 includes the piston 33, the crank shaft 34, and the connecting rod 35. In the crank shaft 34, there is provided a counterweight 34w1 which is provided in a side opposite to a crank pin 34p while interposing the crank shaft 34, and which rotates together with the crank shaft 34. Further, in a position different from the counterweight 34w1 in a circumferential direction of the crank shaft 34, there is provided a weight 34w2 rotating together with the crank shaft 34. Incidentally, in Fig. 8 and Fig. 9, the counterweight 34w1 and the weight 34w2 are denoted as black circles. Further, in Fig. 9, a balancer weight 37w is denoted as a black circle. Further, here, for convenience of the present description, the counterweight 34w1, the weight 34w2 and the crank pin 34p are explained as located in positions whose distances from a shaft center Co of the crank shaft 34 are equal (distance r in Fig. 9).

In the present embodiment, a position of the balancer shaft 37, a position of the balancer weight 37w in the circumferential direction of the balancer shaft 37, a position of the crank shaft 34, and a position of the weight 34w2 in the circumferential direction of the crank shaft 34 are set such that the vibration transmitted to the pivot shaft 109 through the downside supported part 22 is reduced.

The position of the weight 34w2 in the circumferential direction of the crank shaft 34 will initially be explained. In the crank mechanism 32, centrifugal forces occur by the fact that the counterweight 34w1, the weight 34w2, the crank pin 34p and a large end part side (crank shaft 34 side) of the connecting rod 35 rotate about the shaft center Co of the crank shaft 34. A centrifugal force obtained by summing the centrifugal forces of these members is denoted as f1 in Fig. 8. A direction of this centrifugal force f1 rotates in compliance with a phase of the crank shaft 34. In Fig. 8, a locus of vector of the centrifugal force f1 is denoted as a circle S1. Further, by the fact that the piston 33 and the a small end part side (piston 33 side) of the connecting rod 35 reciprocate in the cylinder 31, inertial forces in an axial direction Y of the cylinder 31 occur in the crank mechanism 32. Between these inertial forces, a primary inertial force f2 fluctuates in compliance with the phase of the crank shaft 34. Therefore, a resultant force (hereunder, made a inertial force F1) of the primary inertial force f2 and the centrifugal force f1 acts on the crank mechanism 32. And, a direction of this inertial force F1 rotates together with the rotation of the crank shaft 34. In Fig. 8, a locus of vector of the inertial force F1 is denoted as an ellipse S2.

In the example explained here, a mass of the counterweight 34w1 is made equal to masses of portions such as the crank pin 34p and the large end part side of the connecting rod 35. In this case, a direction (direction that X denotes in Fig. 8) of a major axis of the ellipse S2 is determined in compliance with a ratio k (hereafter, made a mass proportion (k = Mc/Mp)) between masses Mp of the portions, such as the piston 33 and the small end part of the connecting rod 35, which reciprocate, and a mass Mc of the weight 34w2, and with the position of the weight 34w2 of the crank shaft 34 in the circumferential direction. That is, if there are supposed that an angle formed by the axial direction Y of the cylinder 31 and a direction that denotes the direction X is $\chi$, and an angle formed by the position of the weight 34w2 and a position of the crank pin 34p is $\phi$, the angle $\chi$ is denoted by the following expression as described in, e.g. , Machine Design, Volume 8, Number 9, Pages 43 - 44, which is published by Nikkan Kogyou Shinbunsha.

$$\chi = \{\tan^{-1} (2k \times \sin \phi)/(1 + 2k \times \cos \phi)\}/2 \cdots (1)$$

And, in the present embodiment, the mass Mc and the position (the angle $\phi$ in Fig. 8) of the weight 34w2 are set such that the direction X of the major axis of the ellipse S2 becomes parallel to a straight line L1 connecting a center of gravity G of the engine unit 20 and a shaft center Po of the pivot shaft 109. Incidentally, in this example, although the weight 34w2 adjusting the direction of the ellipse S2 and the counterweight 34w1 are explained as separate ones, these may be monolithically molded.

The balancer mechanism 36 will now be described. As shown in Fig. 9, the balancer shaft 37 is disposed in a position in which a straight line L2 connecting a shaft center Bo of the balancer shaft 37 and the shaft center Co of the crank shaft 34 becomes parallel to the above-mentioned straight line L1. As mentioned above, in the balancer shaft 37, there is provided the balancer weight 37w rotating together with the balancer shaft 37. Therefore, in the balancer mechanism 36, a centrifugal force F2 by rotations of the balancer shaft 37 and the balancer weight 37w occurs. In Fig. 9, a locus of vector of the centrifugal force F2 is denoted as a circle S3. The balancer weight 37w is provided so as to rotate about the shaft center Bo of the balancer shaft 37 in the same direction as the inertial force F1. Further, the position of the balancer weight 37w in the circumferential direction of the balancer shaft 37 is set such that a direction of the centrifugal force F2 becomes a direction reverse to the inertial force F1 directing to directions of the major axis and a minor axis of the above-mentioned ellipse S2.

A positional relation between the crank shaft 34 and the balancer shaft 37, and a mass of the balancer weight 37w will now be described.

As shown in Fig. 9, the balancer shaft 37 is disposed separately from the crank shaft 34. Therefore, moments of the centrifugal force F2 and the inertial force F1 occur in the engine unit 20. The engine unit 20 vibrates by these moments, and an acceleration occurs in the pivot shaft 109. Further, an acceleration by a resultant force of the centrifugal force F2 and the inertial force F1 also occurs in the pivot shaft 109.

In the example explained here, the mass of the balancer weight 37w and the positional relation between the balancer shaft 37 and the crank shaft 34 are set such that the acceleration occurring by the moments of the centrifugal force F2 and the inertial force F1 reduces the acceleration occurring by this resultant force. That is, the mass of the balancer weight 37w is set such that the centrifugal force F2 of the balancer mechanism 36 becomes equal to a maximum value of the inertial force F1 of the crank mechanism 32. Therefore, in Fig. 9, a radius of the circle S3 and a radius of the major axis of the ellipse S2 become equal.

The positional relation between the crank shaft 34 and the balancer shaft 37 is set as follows. As shown in Fig. 9, it is supposed that L is a distance from the straight line L1 connecting the center of gravity G of the engine unit 20 and the shaft center Po of the pivot shaft 109 to the straight line L2 connecting the shaft center Co of the crank shaft 34 and the shaft center Bo of the balancer shaft 37. Further, it is supposed that Lp is a distance from the center of gravity G of the engine unit 20 to the shaft center Po of the pivot shaft 109. Further, it is supposed that Lb is a distance from a straight line L3, which passes the center of gravity G and is parallel to a VD direction (direction perpendicular to the straight line L1 and the straight line L2), to the shaft center Bo of the balancer shaft 34. Additionally, it is supposed that Lc is a distance from the straight line L3 to the shaft center Co of the crank shaft 34. At this time, positions of the crank shaft 34 and the balancer shaft 37 are set such that each of the distances satisfies the following expression (2).

$$A \times \{M \times Lp (Lb + Lc) + 2I\} = M \times Lp \times Lc + I \cdots (2)$$

Incidentally, in the expression (2), M is a mass of the engine unit 20, and I is a moment of inertia, of the engine unit 20, relating to a straight line which passes the center of gravity G and is parallel to the vehicle width direction. Further, a value A is a proportion (major axis : minor axis = A : (1 -A)) between the major axis and the minor axis of the ellipse S2 depicted by the vector of the inertial force F1 of the crank mechanism 32. As described in, e.g. , Machine Design, Volume 8, Number 9, Pages 43 - 44, which is published by Nikkan Kogyou Shinbunsha, this value A is denoted by the following expression (3) by the angle $\chi$ formed by the direction X of the major axis of the ellipse S2 and the axial direction S of the cylinder 31, the angle $\phi$ formed by the weight 34w2 and the crank pin 34p, and the mass proportion k, which are mentioned above.

$$A = k \times \sin (\phi - \chi)/\sin \chi \cdots (3)$$

Expression (2) identified above will now be described in detail.

First, there are calculated a component F2v in the VD direction and a component F2p in a PD direction (direction parallel to the straight line L2) of the centrifugal force F2 of the balancer mechanism 36, and a component F1v in the VD direction and a component F1p in the PD direction of the inertial force F1 of crank mechanism 32.

If it is supposed that F (F = $mr\omega^2$, where r = a distance from the shaft center Co of the crank shaft 34 to the crank pin 34p, and $\omega$ = an angular velocity of the crank shaft 34) is a maximum value of a primary inertial force occurring in a portion (mass m) reciprocating in the crank mechanism 32, the radius (maximum value of the inertial force F1 in the crank mechanism 32) of the major axis of the ellipse S2 becomes $A \times F$ as described in, e.g., Machine Design, Volume 8, Number 9, Pages 43 - 44, which is published by Nikkan Kogyou Shinbunsha. Further, a radius (minimum value of the inertial force F1) of the minor axis becomes $(1 - A) \times F$. As shown in Fig. 9, if it is supposed that $\theta$ is an angle, of the inertial force F1 of the crank mechanism 32, in regard to the straight line L2, an angle of the centrifugal force F2 of the balancer mechanism 36 becomes $\pi + \theta$. Accordingly, the component F1v of the inertial force F1 of the crank shaft 34 in the VD direction becomes $(1 - A) \times F \sin \theta$. Further, the component F1p of the inertial force F1 of the crank shaft 34 in the PD direction becomes A v F cos $\theta$. Further, since a mass of the balancer weight 37w is set such that the centrifugal force F2 of the balancer mechanism 36 becomes equal to the maximum value of the inertial force F1 of the crank mechanism 32, the component F2v of the centrifugal force F2 of the balancer mechanism 36 in the VD direction becomes $A \times F \sin (\pi + \theta)$, and the component F2p in the PD direction becomes $A \times F \cos (\pi + \theta)$.

Next, there is calculated a component (a1 in Fig. 9) of the acceleration of the pivot shaft 109 in the VD direction, which occurs by the moments of the centrifugal force F2 and the inertial force F1. Moments N, of the inertial force F1 and the centrifugal force F2, about the center of gravity G are denoted like the following expression (4).

$$N = F1p \times L + F2p \times L + F1v \times Lc + F2v \times Lb$$
$$= A \times F \cos \theta \times L + A \times F \cos (\pi + \theta) \times L + (1 - A) \times F \sin$$
$$\theta \times Lc + A \times F \sin (\pi + \theta) \times Lb \cdots (4)$$

Here, since cos $(\pi + \theta)$ = - cos $\theta$ and sin $(\pi + \theta)$ = - sin $\theta$, the expression (4) is denoted like the following expression (5).

$$N = (1 - A) \times F \sin \theta \times Lc - A \times F \sin \theta \times Lb \cdots (5)$$

Further, if it is supposed that $\beta$ is an angular acceleration about the center of gravity G by the moments N, and a1 is an acceleration of the shaft center Po in the VD direction, which occurs by the moments N, the acceleration a1 in the VD direction and the angular acceleration $\beta$ are denoted respectively by the following expressions (6) and (7).

$$a1 = Lp \times \beta \cdots (6)$$

$$\beta = N/I \cdots (7)$$

Here, as mentioned above, I is the moment of inertia, of the engine unit 20, relating to the straight line which passes the center of gravity G and is parallel to the vehicle width direction.

From the above expression (5), the above expression (7) is denoted like the following expression (8).

$$\beta = \{(1 - A) \times \sin \theta \times Lc - A \times F \sin \theta \times Lb\}/I \cdots (8)$$

From the above expressions (6) and (8), the acceleration a1 is denoted like the following expression (9).

$$a1 = Lp \times \{(1 - A) \times \sin \theta \times Lc - A \times F \sin \theta \times Lb\}/I \cdots (9)$$

Further, an acceleration a2 of the shaft center Po in the VD direction, which occurs by the resultant force of the inertial force F1 and the centrifugal force F2 is denoted like the following expression (10).

$$a2 = (F1v + F2v)/M$$

$$= \{(1 - A) \times F \sin \theta + A \times F \sin (\pi + \theta)\}/M$$

$$= \{(1 - A) \times F \sin \theta - A \times F \sin \theta\}/M$$

$$= (1 - 2A) \times F \sin \theta/M \cdots (10)$$

Here, as mentioned above, M is the mass of the engine unit 20.

Here, in a case where the acceleration a1 of the shaft center Po in the VD direction, which occurs by the moments N, and the acceleration a2 of the shaft center Po in the VD direction, which occurs by the resultant force of the inertial force F1 and the centrifugal force F2, cancel each other, i.e., in a case where there becomes a1 + a2 = 0, the shaft center Po of the pivot shaft 109 becomes a momentary rotation center of the engine unit 20, and the vibration of the pivot shaft 109 in the VD direction is suppressed. And, a sum total of the acceleration a1 and the acceleration a2 is denoted by the following expression from the above expressions (9) and (10).

$$a1 + a2 = Lp \times \{(1- A) \times F \sin \theta \times Lc - A \times F \sin \theta \times Lb\}/I$$

$$+ (1 - 2A) \times F \sin \theta/M = 0$$

If this is arranged, there becomes like the following expression.

$$F \sin \theta [Lp \times \{(1 - A) \times Lc - A \times Lb\}/I + (1 - 2A)/M] = 0$$

At this time, since F ≠ 0, there becomes

$$\sin \theta [Lp \times \{(1 - A) \times Lc - A \times Lb\}/I + (1 - 2A)/M] = 0$$

Here, when $\sin \theta \neq 0$ (in a case of $\theta \neq 0, \pi$), the following expression (11) is satisfied.

$$Lp \times \{(1 - A) \times Lc - A \times Lb\}/I + (1 - 2A)/M = 0 \cdots (11)$$

By arranging the above expression (11), a relation between distances Lp, Lc, Lb and the proportion A between the major axis and the minor axis of the ellipse S2 depicted by the vector of the inertial force F1 occurring in the crank mechanism 32 is denoted by the following expression which is equal to the above-mentioned expression (2).

$$A \times \{M \times Lp \ (Lb + Lc) + 2I\} = M \times Lp \times Lc + I$$

Further, when sin θ = 0 (in a case of θ = 0, π), since the acceleration a1 and the acceleration a2 become respectively a1 = 0 and a2 = 0 from the above expressions (9) and (10), a1 + a2 = 0 is satisfied. The above are explanations of the expression (2) determining the positional relations among the crank shaft 34, the balancer shaft 37 and the center of gravity G.

Incidentally, an acceleration of the shaft center Po, which occurs in the PD direction, becomes 0. That is, since the straight line L1 and the straight line L2 are parallel, an acceleration a3 of the shaft center Po, which occurs in the PD direction by the above-mentioned moments, becomes 0.

Further, an acceleration a4 of the shaft center Po, which occurs in the PD direction by the resultant force of the inertial force F1 and the centrifugal force F2, is denoted like the following expression (13).

$$a4 = (F1p + F2p)/M$$
$$= \{A \times F \cos \theta + A \times F \cos (\pi + \theta)\}/M$$
$$= \{A \times F \cos \theta - A \times F \cos \theta\}/M$$
$$= 0 \ \cdots \ (13)$$

By this, since there becomes a3 + a4 = 0 and the acceleration of the shaft center Po, which occurs in the PD direction, becomes 0 as well, the vibration of the pivot shaft 109 in the PD direction of the shaft center Po is suppressed.

According to the motorcycle 1 explained above, the downside supported part 22 of the engine unit 20 is rotatably supported by the pivot shaft 109 without being supported through the suspension member for vibration insulation. Therefore, the driving force generated by the rotation of the rear wheel 3 becomes easy to be transmitted to the body frame 10. As a result, the rider can feel the acceleration of the vehicle without delaying from a rise in the rotational speed of the rear wheel 3, so that the operational feedback of the vehicle is improved. Further, the upside supported part 23 of the engine unit 20 is connected to the body frame 10 through the buffer 50 and the link mechanism 60. Therefore, an abrupt swing of the engine unit 20, which complies with the irregularities of the road surface, is buffered, so that the ride comfort is improved. Additionally, the link mechanism 60 is constituted such that, as the motion quantity of the engine unit 20 becomes large, a ratio of the expansion/contraction quantity of the buffer 50 in regard to the motion quantity of the engine unit 20 becomes large. By this, e.g., when the irregularities of road surface are small, the swing of the engine unit 20 is liable to be allowed in comparison with when the irregularities are large, so that the ride comfort is more improved.

Incidentally, the invention is not limited to the motorcycle 1 explained above, and various modifications are possible. For example, as the power source of the vehicle, the motorcycle 1 possesses the engine 30 driving by combusting the fuel. However, the power source is not limited to the engine like this, and there may be an electric motor driving by receiving a supply of an electric power, or a hybrid engine in which the electric motor and the combustion engine are combined.

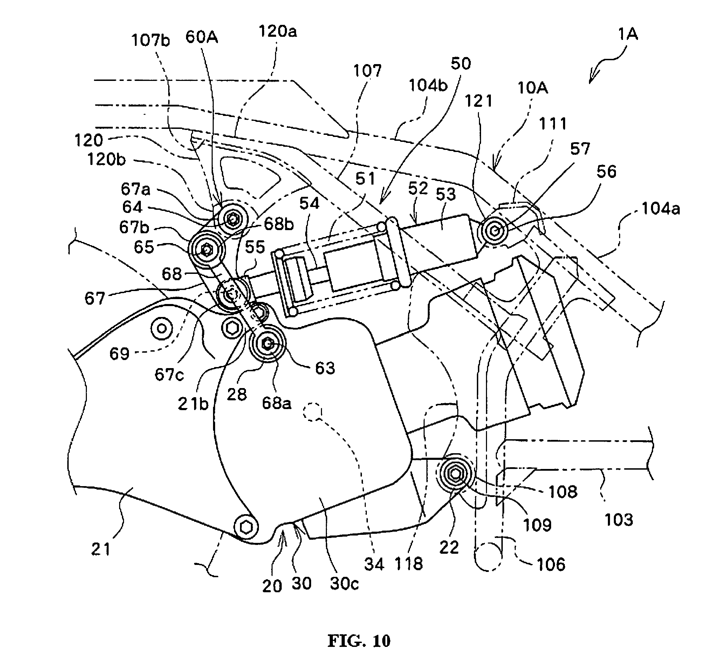

Further, in the above explanations, the frame side attachment part 56 of the buffer 50 is connected to the body frame 10 through the link mechanism 60. However, the engine side attachment part 55 may be connected to the engine unit 20 through the link mechanism. Fig. 10 is a view showing an example of a motorcycle, which is concerned with this mode. The reference numerals in Fig. 10 relate to similar features identified in the previous Figs., and as such no further description of these common features will be given.

A motorcycle 1A possesses a body frame 10A, and a link mechanism 60A. The body frame 10A includes a link attachment bracket 120, and a buffer attachment part 121. The buffer attachment part 121 is joined to the upside cross part 111, and protrudes toward the vehicle body rearward from the upside cross part 111. The frame side attachment part 56 of the buffer 50 is rotatably attached to the buffer attachment part 121 by a bolt 57.

The link attachment bracket 120 is an approximately triangular shape member, and its upper edge part 120a is joined to the rear end part 107b of the support post part 107. The link attachment bracket 120 protrudes downward from the upper edge part 120a, and the link mechanism 60A is connected to its end part 120b.

The link mechanism 60A possesses a lever 67, and a rod 68. The lever 67 includes a supporting point part 67a, a rod attachment part 67b and a buffer attachment part 67c, and is disposed so as to extend downward from the supporting point part 67a. The supporting point part 67a is rotatably attached to the end part 120b of the link attachment

## EP 1 950 131 B1

bracket 120 by the bolt 64. One end part 68b of the rod 68 is rotatably attached to the rod attachment part 67b by the bolt 65. The engine side attachment part 55 of the buffer 50 is attached by a bolt 69 to the buffer attachment part 67c provided downward than the rod attachment part 67b.

In this example, in the crank case 30c, there is formed a link attachment part 28 protruding laterally. This link attachment part 28 is placed slightly downward relative to the attachment part 21b of the rear arm 21. The other end part 68a of the rod 68 is attached to this link attachment part 28 by a bolt 63.

The buffer attachment part 67c of the lever 67 is provided in a position behind the buffer attachment part 121 of the body frame 10A and slightly lower than the buffer attachment part 121. Therefore, also in the example shown in Fig. 10, the expansion/contraction direction of the buffer 50 slants in the traveling direction of the vehicle. By this, a force in a vertical direction, which occurs by the expansion/contraction of the buffer 50, is reduced, so that the ride comfort at the running time is improved.

Description of Reference Numerals

| | |
|---|---|
| 1, 1A: | motorcycle |
| 2: | front wheel |
| 3: | rear wheel |
| 4: | wheel shaft |
| 5: | brake disc |
| 6: | brake caliper |
| 7: | front fork |
| 8: | handle |
| 9: | seat |
| 10, 10A: | body frame |
| 20: | engine unit |
| 21: | rear arm |
| 22: | downside supported part (first supported part) |
| 23: | upside supported part (second supported part) |
| 24: | link attachment part |
| 30: | engine |
| 31: | cylinder |
| 32: | crank mechanism |
| 33: | piston |
| 34: | crank shaft |
| 35: | connecting rod |
| 36: | balancer mechanism |
| 37: | balancer shaft |
| 40: | transmission mechanism |
| 41: | stepless transmission |
| 42: | drive pulley |
| 43: | driven pulley |
| 44: | V-belt |
| 45: | driven shaft |
| 46: | intermediate shaft |
| 47: | drive case |
| 50: | buffer |
| 51: | coil spring |
| 52: | damper |
| 53: | outer tube |
| 54: | rod |
| 55: | engine side attachment part |
| 56: | frame side attachment part |
| 60, 60A: | link mechanism |
| 61, 68: | rod |
| 62, 67: | lever |
| 71: | intake pipe |

| 72: | injector |
|---|---|
| 73: | throttle body |
| 75: | air cleaner |
| 101: | head pipe |
| 102: | upside frame part |
| 103: | downside frame pipe |
| 104: | rear side frame part |
| 106: | longitudinal frame part |
| 107: | support post part |
| 108: | pivot support part |
| 109: | pivot shaft |
| 111: | upside cross part |
| 112: | downside cross part |
| 113: | front side cross part |
| 114: | rear side cross part |
| 115: | reinforcing plate |
| 116: | reinforcing plate |
| 117: | reinforcing frame part |
| 118: | support plate part |
| 119: | link attachment part |
| 120: | link attachment bracket |
| 121: | buffer attachment part |

**Claims**

1. A vehicle (1) comprising:

   a body frame (10);
   a pivot shaft (109) supported by the body frame (10) ;
   a power unit (20) coupled to a rear wheel (3) and being swingable relative to the body frame (10);
   a buffer (50) adapted to buffer a swing of the power unit (20) by expanding/contracting; and
   a link mechanism (60) is constituted such that as the motion quantity of the power unit (20) becomes larger, a ratio of the expansion/contraction quantity of the buffer (50) to the motion quantity becomes larger;
   wherein the power unit (20) comprises a first supported part (22) attached to the pivot shaft (109) without being supported through a suspension member to permit the power unit (20) to be swingable up and down, and a second supported part (23) connected to the body frame (10) through the link mechanism (60) and the buffer (50).

2. A vehicle (1) according to claim 1, wherein movement of the pivot shaft (109) in at least a front-rear direction relative to the body frame (10) is regulated.

3. A vehicle (1) according to claim 1 or 2, wherein the power unit (20) is coupled to the rear wheel (3) via a transmission mechanism (40).

4. A vehicle (1) according to claim 1, 2 or 3, wherein one end of the buffer (50) is connected to the second supported part (23), and another end is connected to the body frame (10) through the link mechanism (60).

5. A vehicle (1) according to any preceding claim, wherein the first supported part (22) of the power unit (20) is provided in a lower part of the power unit (20).

6. A vehicle (1) according to any preceding claim, wherein the buffer (50) is disposed above the power unit (20).

7. A vehicle (1) according to any preceding claim, wherein the buffer (50) is disposed so as to expand/contract in a circumferential direction of a circle whose center is defined by the pivot shaft (109).

8. A vehicle (1) according to any preceding claim, wherein:

   the body frame (10) has a buffer support part to which the buffer (50) is connected, and

the buffer support part is placed forward of the second supported part (23) of the power unit (20).

9. A vehicle (1) according to any preceding claim, wherein the power unit (20) comprises a crank mechanism (32) including a piston (33) reciprocating in a cylinder (31) and a crank shaft (34) converting a reciprocating motion of the piston (33) into a rotational motion, and a balancer mechanism (36) adapted to reduce vibration of the power unit (20) generated by the reciprocating motion of the piston (33).

10. A vehicle (1) according to claim 9, wherein:

the balancer mechanism (36) includes a balancer shaft (37) and a balancer weight (37w) rotating together with the balancer shaft (37); and
the balancer shaft (37) and the balancer weight (37w) are disposed so as to reduce the vibration transmitted to the pivot shaft (109) through the first supported part (22).

11. A vehicle (1) according to claim 10, wherein the balancer shaft (37) and the balancer weight (37w) are disposed such that an acceleration occurring in the pivot shaft by a resultant force of a centrifugal force occurring by a rotation of the balancer shaft (37) and an inertial force occurring by the reciprocating motion of the piston (33) and the rotational motion of the crank shaft (34) is reduced by an acceleration occurring in the pivot shaft (109) by moments of the centrifugal force and the inertial force.

12. A vehicle (1) according to any preceding claim, provided in the form of a straddle-type vehicle.

13. A vehicle according to claim 2, wherein the vehicle is a straddle-type vehicle (1), wherein
the power unit (20) includes a power source and a transmission mechanism (40) for transmitting a power that the power source outputs to a rear wheel (3), and which is swingable up and down together with the rear wheel (3); and
the power unit (20) is swingable with the pivot shaft (109) being made a supporting point.

**Patentansprüche**

1. Fahrzeug (1), das Folgendes umfasst:

einen Aufbaurahmen (10),
eine Schwingenachse (109), die durch den Aufbaurahmen (10) getragen wird,
eine Antriebseinheit (20), die an ein Hinterrad (3) gekoppelt ist und im Verhältnis zu dem Aufbaurahmen (10) schwenkbar ist,
einen Stoßdämpfer (50), der dafür eingerichtet ist, durch Ausdehnen/Zusammenziehen ein Schwingen der Antriebseinheit (20) zu dämpfen, und
einen Verknüpfungsmechanismus (60), der derart aufgebaut ist, dass, wenn das Bewegungsausmaß der Antriebseinheit (20) größer wird, ein Verhältnis des Ausdehnungs-/Zusammenziehungsausmaßes des Stoßdämpfers (50) zu dem Bewegungsausmaß größer wird,
wobei die Antriebseinheit (20) einen ersten gestützten Teil (22), der an der Schwingenachse (109) befestigt ist, ohne durch ein Aufhängungselement getragen zu werden, um zu ermöglichen, dass die Antriebseinheit (20) nach oben und nach unten schwenkbar ist, und einen zweiten gestützten Teil (23), der durch den Verknüpfungsmechanismus (60) und den Stoßdämpfer (50) mit dem Aufbaurahmen (10) verbunden ist, umfasst.

2. Fahrzeug (1) nach Anspruch 1, wobei die Bewegung der Schwingenachse (109) in wenigstens einer Vorwärts-Rückwärts-Richtung im Verhältnis zu dem Aufbaurahmen (10) reguliert wird.

3. Fahrzeug (1) nach Anspruch 1 oder 2, wobei die Antriebseinheit (20) über einen Übertragungsmechanismus (40) an das Hinterrad (3) gekoppelt ist.

4. Fahrzeug (1) nach Anspruch 1, 2 oder 3, wobei ein Ende des Stoßdämpfers (50) mit dem zweiten gestützten Teil (23) verbunden ist und ein anderes Ende durch den Verknüpfungsmechanismus (60) mit dem Aufbaurahmen (10) verbunden ist.

5. Fahrzeug (1) nach einem der vorhergehenden Ansprüche, wobei der erste gestützte Teil (22) der Antriebseinheit (20) in einem unteren Teil der Antriebseinheit (20) bereitgestellt wird.

**6.** Fahrzeug (1) nach einem der vorhergehenden Ansprüche, wobei der Stoßdämpfer (50) oberhalb der Antriebseinheit (20) angeordnet ist.

**7.** Fahrzeug (1) nach einem der vorhergehenden Ansprüche, wobei der Stoßdämpfer (50) so angeordnet ist, dass er sich in einer Umfangsrichtung eines Kreises, dessen Mittelpunkt durch die Schwingenachse (109) definiert wird, ausdehnt/zusammenzieht.

**8.** Fahrzeug (1) nach einem der vorhergehenden Ansprüche, wobei:

der Aufbaurahmen (10) einen Stoßdämpfer-Stützteil hat, mit dem der Stoßdämpfer (50) verbunden ist, und der Stoßdämpfer-Stützteil vor dem zweiten gestützten Teil (23) der Antriebseinheit (20) angeordnet ist.

**9.** Fahrzeug (1) nach einem der vorhergehenden Ansprüche, wobei die Antriebseinheit (20) einen Kurbelmechanismus (32) umfasst, der einen Kolben (33), der in einem Zylinder (31) hin- und hergeht, und eine Kurbelwelle (34), die eine Hin- und Herbewegung des Kolbens (33) in eine Drehbewegung umwandelt, und einen Ausgleichsmechanismus (36), der dafür eingerichtet ist, eine Vibration der Antriebseinheit (20), die durch die Hin- und Herbewegung des Kolbens (33) erzeugt wird, zu verringern.

**10.** Fahrzeug (1) nach Anspruch 9, wobei:

der Ausgleichsmechanismus (36) eine Ausgleichswelle (37) und ein Ausgleichsgewicht (37w), das sich zusammen mit der Ausgleichswelle (37) dreht, einschließt und die Ausgleichswelle (37) und das Ausgleichsgewicht (37w) so angeordnet sind, dass sie die Vibration, die durch den ersten gestützten Teil (22) zu der Schwingenachse (109) übertragen wird, verringern.

**11.** Fahrzeug (1) nach Anspruch 10, wobei die Ausgleichswelle (37) und das Ausgleichsgewicht (37w) derart angeordnet sind, dass eine Beschleunigung, die in der Schwingenachse durch eine resultierende Kraft einer Zentrifugalkraft auftritt, die durch eine Drehung der Ausgleichswelle (37) auftritt, und eine Trägheitskraft, die durch die Hin- und Herbewegung des Kolbens (33) und die Drehbewegung der Kurbelwelle (34) auftritt, durch eine Beschleunigung, die in der Schwingenachse (109) durch Momente der Zentrifugalkraft und der Trägheitskraft auftritt, verringert wird.

**12.** Fahrzeug (1) nach einem der vorhergehenden Ansprüche, bereitgestellt in der Form eines Reitsitzfahrzeugs.

**13.** Fahrzeug nach Anspruch 2, wobei das Fahrzeug ein Reitsitzfahrzeug (1) ist, wobei die Antriebseinheit (20) eine Antriebsquelle und einen Übertragungsmechanismus (40) umfasst zum Übertragen eines Antriebs, den die Antriebsquelle ausgibt, an ein Hinterrad (3) und zusammen mit dem Hinterrad (3) nach oben und nach unten geschwenkt werden kann, und die Antriebseinheit (20) schwenkbar ist, wobei die Schwingenachse (109) zu einem Unterstützungspunkt gemacht wird.

**Revendications**

**1.** Véhicule (1) comprenant :

un cadre (10) ;
un axe de pivot (109) supporté par le cadre (10) ;
une unité motrice (20) couplée à une roue arrière (3) et pouvant osciller par rapport au cadre (10) ;
un amortisseur (50) conçu pour amortir une oscillation de l'unité motrice (20) par allongement/contraction ; et
un mécanisme de liaison (60) est constitué de telle manière qu'un rapport de la quantité d'allongement/contraction de l'amortisseur (50) sur la quantité de mouvement de l'unité motrice (20) augmente à mesure que ladite quantité de mouvement augmente ;
dans lequel l'unité motrice (20) comprend une première pièce supportée (22) fixée à l'axe de pivot (109) sans être supportée par l'intermédiaire d'un organe de suspension afin de permettre à l'unité motrice (20) de pouvoir osciller vers le haut et vers le bas, et une seconde pièce supportée (23) raccordée au cadre (10) par l'intermédiaire du mécanisme de liaison (60) et de l'amortisseur (50).

**2.** Véhicule (1) selon la revendication 1, dans lequel un mouvement de l'axe de pivot (109) dans au moins une direction avant-arrière par rapport au cadre (10) est régulé.

3. Véhicule (1) selon la revendication 1 ou 2, dans lequel l'unité motrice (20) est couplée à la roue arrière (3) par l'intermédiaire d'un mécanisme de transmission (40).

4. Véhicule (1) selon l'une quelconque des revendications 1, 2 ou 3, dans lequel une extrémité de l'amortisseur (50) est raccordée à la seconde pièce supportée (23), et une autre extrémité est raccordée au cadre (10) par l'intermédiaire du mécanisme de liaison (60).

5. Véhicule (1) selon l'une quelconque des revendications précédentes, dans lequel la première pièce supportée (22) de l'unité motrice (20) est fournie dans une partie inférieure de l'unité motrice (20).

6. Véhicule (1) selon l'une quelconque des revendications précédentes, dans lequel l'amortisseur (50) est agencé au-dessus de l'unité motrice (20).

7. Véhicule (1) selon l'une quelconque des revendications précédentes, dans lequel l'amortisseur (50) est agencé de manière à s'allonger/se contracter dans une direction circonférentielle d'un cercle dont le centre est défini par l'axe de pivot (109).

8. Véhicule (1) selon l'une quelconque des revendications précédentes, dans lequel :

le cadre (10) présente une pièce de support d'amortisseur à laquelle l'amortisseur (50) est raccordé, et
la pièce de support d'amortisseur est placée à l'avant de la seconde pièce supportée (23) de l'unité motrice (20).

9. Véhicule (1) selon l'une quelconque des revendications précédentes, dans lequel l'unité motrice (20) comprend un mécanisme de manivelle (32) comprenant un piston (33) allant et venant dans un cylindre (31) et un axe de manivelle (34) convertissant un mouvement de va-et-vient du piston (33) en un mouvement rotatif, et un mécanisme d'équilibrage (36) conçu pour réduire une vibration de l'unité motrice (20) générée par le mouvement de va-et-vient du piston (33).

10. Véhicule (1) selon la revendication 9, dans lequel :

le mécanisme d'équilibrage (36) comprend un axe d'équilibrage (37) et un poids d'équilibrage (37w) tournant en même temps que l'axe d'équilibrage (37) ; et
l'axe d'équilibrage (37) et le poids d'équilibrage (37w) sont agencés de manière à réduire la vibration transmise à l'axe de pivot (109) par l'intermédiaire de la première pièce supportée (22).

11. Véhicule (1) selon la revendication 10, dans lequel l'axe d'équilibrage (37) et le poids d'équilibrage (37w) sont agencés de telle manière qu'une accélération survenant dans l'axe de pivot du fait d'une résultante d'une force centrifuge due à une rotation de l'axe d'équilibrage (37) et d'une force inertielle due au mouvement de va-et-vient du piston (33) et au mouvement rotatif de l'axe de manivelle (34) est réduite par une accélération survenant dans l'axe de pivot (109) pour des moments de la force centrifuge et de la force inertielle.

12. Véhicule (1) selon l'une quelconque des revendications précédentes, fourni sous la forme d'un véhicule de type à enfourcher.

13. Véhicule selon la revendication 2, dans lequel le véhicule est un véhicule de type à enfourcher (1), dans lequel l'unité motrice (20) comprend une source motrice et un mécanisme de transmission (40) permettant de transmettre une puissance motrice produite par la source motrice vers une roue arrière (3), et peut osciller vers le haut et vers le bas en même temps que la roue arrière (3) ; et
l'unité motrice (20) peut osciller, l'axe de pivot (109) devenant un point de support.

FIG. 1

FIG. 2

EP 1 950 131 B1

FIG.3

FIG. 4

FIG. 5

**FIG. 6**

**FIG. 7**

FIG. 8

FIG. 9

**FIG. 10**

EP 1 950 131 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004276643 A

- FR 2722756

**Non-patent literature cited in the description**

- Machine Design. Nikkan Kogyou Shinbunsha, vol. 8, 43-44